# EUROPEAN PATENT SPECIFICATION

(11) **EP 3 197 084 B1**
(45) Date of publication and mention of the grant of the patent: **24.07.2019**
(21) Application number: 15842988.6
(22) Date of filing: 07.09.2015
(51) Int. Cl.: H04L 1/16, H04W 24/08, H04W 28/04, H04W 88/02, H04L 1/20, H04L 1/00, H04L 12/24

(54) **WIRELESS CONTROL SYSTEM, AND METHOD FOR MONITORING WIRELESS LINK ERROR**
DRAHTLOSES STEUERUNGS-SYSTEM UND VERFAHREN ZUR ÜBERWACHUNG VON DRAHTLOSEN VERBINDUNGSFEHLERN
SYSTÈME DE COMMANDE SANS FIL, ET PROCÉDÉ POUR SURVEILLER UNE ERREUR DE LIAISON SANS FIL

(30) Priority: 19.09.2014 JP 2014191281
(43) Date of publication of application: 26.07.2017
(73) Proprietor: NEC Corporation, Tokyo 108-8001 (JP)
(72) Inventor: HATA, Hideo, Tokyo 108-8001 (JP)
(74) Representative: Mathys & Squire LLP
(86) International application number: PCT/JP2015/004528
(87) International publication number: WO 2016/042731

(56) References cited:
- JP-A- 2000 269 911
- JP-A- 2001 308 753
- JP-A- 2005 175 715
- JP-A- 2009 284 066
- US-A1- 2007 116 046
- US-A1- 2011 032 910
- US-A1- 2012 250 738
- ERICSSON AB ET AL: 'COMMON PUBLIC RADIO INTERFACE (CPRI);INTERFACE SPECIFICATION' CPRI SPECIFICATION V 6.1 01 July 2014, page 17,18,21,37, 46,53,58, XP055312785

## Description

### [Technical Field]

The present invention relates to a wireless control system and a method for monitoring a wireless link error.

### [Background Art]

CPRI (Common Public Radio Interface) is an interface for connecting a wireless control device (REC: Radio Equipment Control) and a wireless device (RE: Radio Equipment) in a wireless base station.

It is a key factor in the communication quality management of wireless base stations that communication quality of a physical layer of CPRI can be monitored on the wireless control device side.

PTL 1 discloses a technique of notifying a desynchronized state by inserting a command code, which is different according to whether a wireless control device and a wireless device are in a synchronized or desynchronized state, into a command byte indicating the start of a hyperframe that is a unit of CPRI signals.

PTL 2 discloses various advantages of the CPRI interface for communicating between a wireless control device and a wireless device in a wireless base station.

### [Citation List]

### [Patent Literature]

[PTL 1] Japanese Unexamined Patent Application Publication No. 2012-217134
[PTL 2] Japanese Unexamined Patent Application Publication (Translation of PCT International Application) No. 2007-507957

US 2012/250738 discloses a radio apparatus includes: first and second reception units to receive first and second signals from first and second radio apparatus controllers, respectively; first and second synchronous clock generation units to generate first and second recovery clocks from clock components included in the first and second signals received by the reception units, respectively; a clock synchronization detection unit to detect whether or not the second recovery clock is synchronous with the first recovery clock; a code selection unit to select a code indicating the synchronous state according to a detection result of the synchronization detection unit; a signal processing unit of generate a third signal to which the code selected by the code selection unit is added and which is synchronous with the first recovery clock; and a transmission unit to transmit the third signal generated by the signal processing unit to the second radio apparatus controller.

### [Summary of Invention]

### [Technical Problem]

CPRI cannot control retransmission on a physical layer due to the nature thereof when an error occurs in a CPRI link. Therefore, it is necessary to have a state where communication quality of the physical layer of the CPRI link can be monitored on a wireless control device side.

For example, there are specifications for abnormality monitoring on a physical layer in "CPRI Specification V6.0". In the specification, specifications for notifying a device on the opposite side of a link state using the Z.130.0 region such as LOS (Loss Of Signal), LOF (Loss Of Frame), and the like, are used.
In PTL 1, only information indicating a synchronized state is added to LOS and LOF information embedded in a hyperframe.
PTL 2 describes only general features for CPRI including above-mentioned LOS and LOF.

The LOS and LOF information is only the information indicating whether communication quality is better or worse than a certain given level. Therefore, even if an error in a CPRI link is determined using specifications for LOS and LOF, a wireless control device cannot sufficiently monitor communication quality.

Also, the specifications for LOS and LOF have a limitation on the data amount of information notifying a link state. Thus, a wireless device does not notify a device on the opposite side in a case of a low frequency of abnormality occurrences and also cannot notify a frequency when the limitation in a case of a high frequency of abnormality occurrences is reached.

Furthermore, there is a problem that it is difficult to identify a malfunction part when an abnormality occurs in a CPRI link. A wireless device often generates an UL (Up Link) CPRI signal to a wireless control device using a clock extracted from a DL (Down Link) CPRI signal. Therefore, it is difficult to identify a malfunction part when local LOS or local LOF occurs in a signal received on the wireless control device side. This is because the wireless control device cannot determine whether the wireless device transmits an abnormal UL CPRI signal caused by an abnormality of the DL CPRI signal transmitted from the wireless control device or the UL CPRI signal is abnormal due to the wireless device side.

The present invention provides a wireless device, a wireless control system, and a method as set out in the appended claims.

A wireless device in one example stores an error occurrence state in a wireless link in a region that can be freely used by a user in the wireless link and transmits the error occurrence
state.

A method for monitoring a wireless link error in one example comprises storing an error occurrence state in a wireless link in a region that can be freely used by a user in the wireless link; and transmitting the error occurrence state.

### [Advantageous Effects of Invention]

According to the present invention, a detailed error occurrence state in each CPRI link can be checked on a wireless control device side.

Throughout the description any references to embodiments which do not fall within the scope of the claims are to be regarded as related examples useful for understanding the invention.

### [Brief Description of Drawings]

Fig. 1 is a block diagram showing one example of a configuration of a wireless control system according to a first example embodiment.
Fig. 2 is a diagram showing one example of CPRI data mapping in a CPRI link.
Fig. 3 is a block diagram of a transmission unit and a reception unit of a wireless control device or a wireless device.
Fig. 4 is a diagram conceptually showing one example of an operation of a wireless device "2".
Fig. 5 is a diagram conceptually showing one example of an operation of a wireless device "1".
Fig. 6 is a diagram conceptually showing one example of an operation of the wireless control device.
Fig. 7 is a diagram showing examples of a link number of a wireless control system according to a second example embodiment.
Fig. 8 is a diagram conceptually showing one example of an operation of a wireless device "2" according to the second example embodiment.
Fig. 9 is a diagram conceptually showing one example of an operation of a wireless device "1" according to the second example embodiment.
Fig. 10 is a diagram conceptually showing one example of an operation of a wireless control device according to the second example embodiment.
Fig. 11 is a block diagram showing one example of a configuration of a wireless device according to a third example embodiment.

### [Description of Embodiments]

### <First Example Embodiment>

A first embodiment for executing the invention is explained in detail with reference to the drawings.

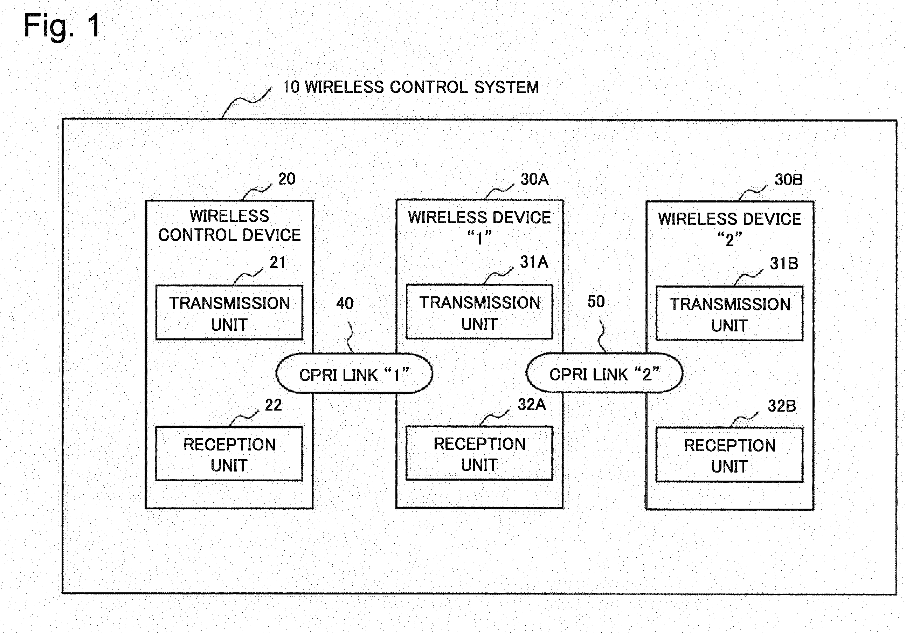

Fig. 1 is a block diagram showing one example of a configuration of a wireless control system 10 according to a first example embodiment.

A wireless control system 10 includes a wireless control device 20, a wireless device "1" 30A, a wireless device "2" 30B, a CPRI link "1" 40, and a CPRI link "2" 50. The wireless control system 10 is, for example, a wireless base station.

The wireless control device 20 connects to and controls the wireless device "1" 30A and the wireless device "2" 30B. The wireless device "1" 30A and the wireless device "2" 30B are also referred to as wireless devices 30 when being called collectively or without specifying them.

The wireless devices 30 process wireless signals.

It is noted that a case where the number of the wireless devices 30 is two is described in the present example embodiment, but the number of the wireless devices 30 may be any number of one or more.

Also, the wireless control system 10 in the present example embodiment shows an example in "a chain topology", in which the wireless control device 20 is connected to the wireless device "2" 30B through the wireless device "1" 30A as shown in Fig. 1. It is noted that the wireless control system 10 may have a configuration of "a star topology", in which a plurality of wireless devices 30 are directly connected to the wireless control device 20, a combination of a plurality of connection forms, or the like. However, even in these configurations, functions of the wireless control device 20 and the wireless devices 30 are the same as the functions in the present example embodiment.

The CPRI link "1" 40 connects the wireless control device 20 and the wireless device "1" 30A. The CPRI link "2" 50 connects the wireless device "1" 30A and the wireless device "2" 30B. The CPRI link "1" 40 and the CPRI link "2" 50 are CPRI interfaces.

Transmission units 21, 31A and 31B of the wireless control device 20, the wireless device "1" 30A and the wireless device "2" 30B respectively transmit a CPRI signal.

Also, reception units 22, 32A and 32B of the wireless control device 20, the wireless device "1" 30A and the wireless device "2" 30B respectively receive a CPRI signal.

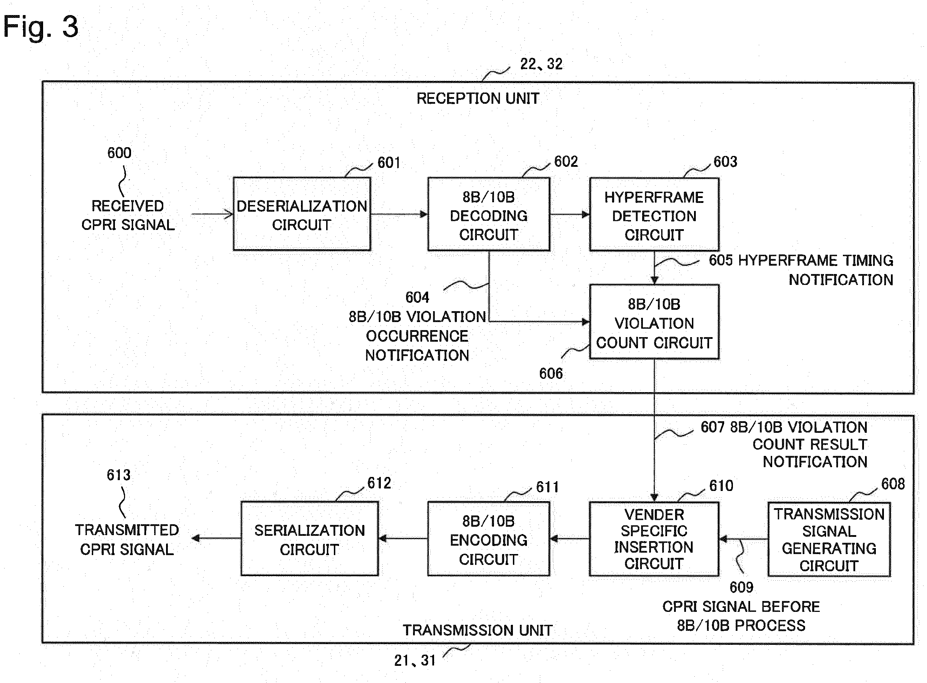

Detailed configurations of the transmission units 21, 31A and 31B, and the reception units 22, 32A and 32B will be explained in Fig. 3 described below.

Data of the CPRI links (the CPRI link "1" 40 and the CPRI link "2" 50), which is hereinafter referred to as CPRI data, is composed of hyperframes. Further, the hyperframes have a hierarchical structure composed of basic frames (1 hyperframe = 256 basic frames).

Also, the basic frames are managed by taking data of 8 bits × 16 words as a data unit and using a line number Y corresponding to the data unit, for example, managed with values of Y0 to Y3 (in a case of Y = 4 lines).

A communication bit rate at the CPRI links is, for example, 2457.6 M bits/s (in a case of 614.4 M bits/s × Y, wherein Y = 4). Also, in this case, one hyperframe is composed of 16384 byte data (= 4 × 16 words × 256 basic frames).

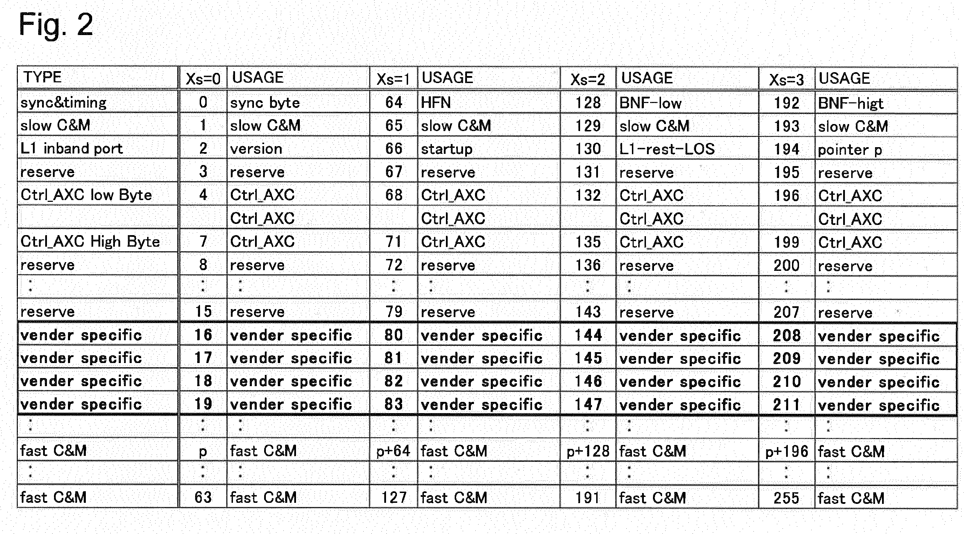

Fig. 2 is a diagram showing one example of CPRI data mapping in a CPRI link. This means that Fig. 2 shows a data structure in one hyperframe. One hyperframe is composed of 256 basic frames.

In the explanation below, "#Z.X.Y" represents an address of data in a hyperframe. In this explanation, X represents an index of a basic frame (corresponding to each number in Fig. 2) and is a value from 0 to 255. Also, Y represents a line number within each data of a basic frame (refer to the line number Y above) and is a value from 0 to 3. In addition, Z represents an index of a hyperframe itself and is a value, for example, from 0 to 149.

Also, Xs (the value is 0 to 3) shown in Fig. 2 has a relation to the aforementioned X as shown in the following equation (1):

X = Ns + 64 × Xs (1)

wherein Ns is the number of items (the number of lines) corresponding to "TYPE" in Fig. 2.

It is noted that the notation, such as "#Z.X1.Y1 to #Z.X2.Y2", used in the explanation below means CPRI data whose range is shown by the address of "#Z.X1.Y1" to "#Z.X2.Y2".

Now, in Fig. 2, a "vender specific" region that the wireless control system 10 in the present example embodiment uses in the CPRI link is shown in the lower area in the drawing and enclosed by a thick frame. The "vender specific" region is one example of regions that a user can freely use and the present example embodiment is characterized by storing obtained error information in this region. It is noted that at least 16 control words (the aforementioned Ns = 16 to 19) are secured as a "vender specific" region in the current "CPRI Specification V6.0". In the present example embodiment, using any "vender specific" region does not make a difference on effects.

The wireless control system 10 in the present example embodiment can notify the side of the wireless control device 20 of a detailed error occurrence state in each CPRI link using the "vender specific" region. Thus, as a result of abnormality monitoring of physical layers in the CPRI links, the wireless control system 10 can notify a device on the opposite side (that means, for example, a device on the other side of each of the wireless control device 20 or the wireless device 30 in terms of transmission and reception) even in a case of a low frequency of abnormality occurrences, or also notify a frequency in a case of a high frequency of the occurrences.

In addition, it is easy to identify a malfunction part because the wireless control system 10 in the present example embodiment can also store information on an error occurrence part in the "vender specific" region.

It is noted that information on LOS and LOF is stored in the #Z.130.Y region (X = 130 in Fig. 2). Also, explanations of the other regions in Fig. 2 are omitted because of the remote relation to an operation specific to the present example embodiment.

Fig. 3 is a block diagram of transmission units 21 and 31 and reception units 22 and 32 of the wireless control device 20 or the wireless device 30. In Fig. 3, the arrow directions in the drawing show one example and do not limit directions of signals between the blocks. In this explanation, the transmission units 31A and 31B in Fig. 1 are also called transmission units 31 when being called collectively or without specifying them. In addition, the reception units 32A and 32B are also called reception units 32 when being called collectively or without specifying them.

It is noted that an 8B/10B process is a high-speed serial transfer mode for transmitting data by converting 8-bit data into 10-bit data. Also, "8B/10B violation" means a violation of data communicated in the 8B/10B process.

A received CPRI signal 600 received at the reception units 22 and 32 is transmitted to a deserialization circuit 601. At the reception unit 22, the received CPRI signal 600 is a signal from the transmission unit 31A. At the reception unit 32A, the received CPRI signal 600 is a signal from the transmission unit 21 or the transmission unit 31B. Also, at the reception unit 32B, the received CPRI signal 600 is a signal from the transmission unit 31A. The deserialization circuit 601 deserializes (converts from serial to parallel) the received CPRI signal 600. Then, an 8B/10B decoding circuit 602 performs an 8B/10B process on deserialized data and outputs the processed data to a hyperframe detection circuit 603.

Also, the 8B/10B decoding circuit 602 detects an "8B/10B violation" during the 8B/10B process. If the "8B/10B violation" is detected, the 8B/10B decoding circuit 602 generates an 8B/10B violation occurrence notification 604. The 8B/10B decoding circuit 602 notifies an 8B/10B violation count circuit 606 of the 8B/10B violation occurrence notification 604 detected during the 8B/10B process.

Also, the hyperframe detection circuit 603 that receives data decoded by the 8B/10B process at the 8B/10B decoding circuit 602 detects a hyperframe on the basis of a CPRI format. Then, the hyperframe detection circuit 603 notifies the 8B/10B violation count circuit 606 of a timing of the detection (transmitting a hyperframe timing notification 605).

The 8B/10B violation count circuit 606 that receives the 8B/10B violation occurrence notification 604 and the hyperframe timing notification 605 counts 8B/10B violations occurring during one hyperframe. Counting is performed for each hyperframe. A counted value is updated for each hyperframe. Then, the counted value is notified to a vender specific insertion circuit 610 on the transmitting side (an 8B/10B violation count result notification (simply called a count result notification as well) 607).

In this case, the 8B/10B violation count circuit 606 transmits the counted value as the 8B/10B violation count result notification 607.

If a notification function that uses the vender specific region according to the present example embodiment is not implemented, the vender specific insertion circuit 610 inserts the 8B/10B violation count result notification 607 notified from the 8B/10B violation count circuit 606 into a CPRI signal (a CPRI signal 609 before the 8B/10B process) generated at a transmission signal generating circuit 608. This allows the vender specific insertion circuit 610 to store, for example, lower 8 bits of a value that is the number of the 8B/10B violation occurrences given in binary number in #Z.X.0 of a CPRI data address and higher 8 bits of the value given in binary number in #Z.X.1 of the address respectively. In a case of a high bit rate, the vender specific insertion circuit 610 can further use #Z.X.2. It is noted that, as shown in Fig. 2, X is any of the values of 16 to 19, 80 to 83, 144 to 147, and 208 to 211 in the vender specific region. Also, the wireless control system 10 can flexibly support various CPRI link configurations by employing a method of notifying each wireless device 30 of a value of X from a wireless control device 20 on an operation mode basis.

Then, the vender specific insertion circuit 610 outputs data into which the 8B/10B violation count result notification 607 is inserted to an 8B/10B encoding circuit 611.

After this, a CPRI signal output from the vender specific insertion circuit 610 is encoded at the 8B/10B encoding circuit 611. Then, the CPRI signal is further serialized at a serialization circuit 612 and transmitted to a device on the opposite side as a transmitted CPRI signal 613.

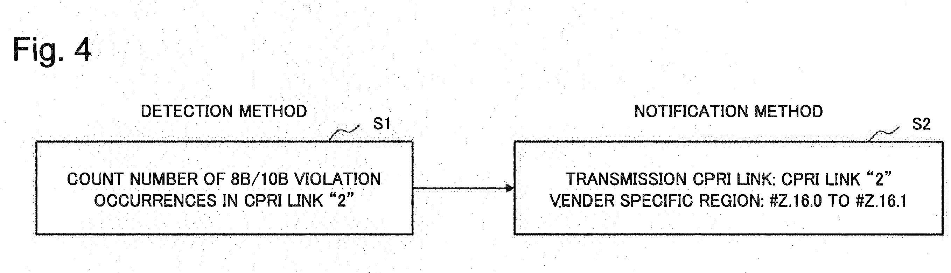

Fig. 4 is a diagram conceptually showing one example of an operation of the wireless device "2" 30B. Using Fig. 4, detection and notification operations of the 8B/10B violation in the wireless device "2" 30B are explained below. The left side of Fig. 4 shows a detection method. Also, the right side of Fig. 4 shows a notification method.

It is assumed that the wireless device "2" 30B receives a CPRI signal as a DL (Down Link) signal from the wireless device "1" 30A through the CPRI link "2" 50. In this case, the wireless device "2" 30B counts the number of 8B/10B violation occurrences in a received CPRI signal for each hyperframe (S1).

Then, the wireless device "2" 30B notifies the wireless device "1" 30A of the counted number of 8B/10B violation occurrences using #Z.16.0 to #Z.16.1 of an UL (Up Link) signal through the CPRI link "2" 50. The notified values are updated by the 8B/10B violation count circuit 606 for each hyperframe (S2).

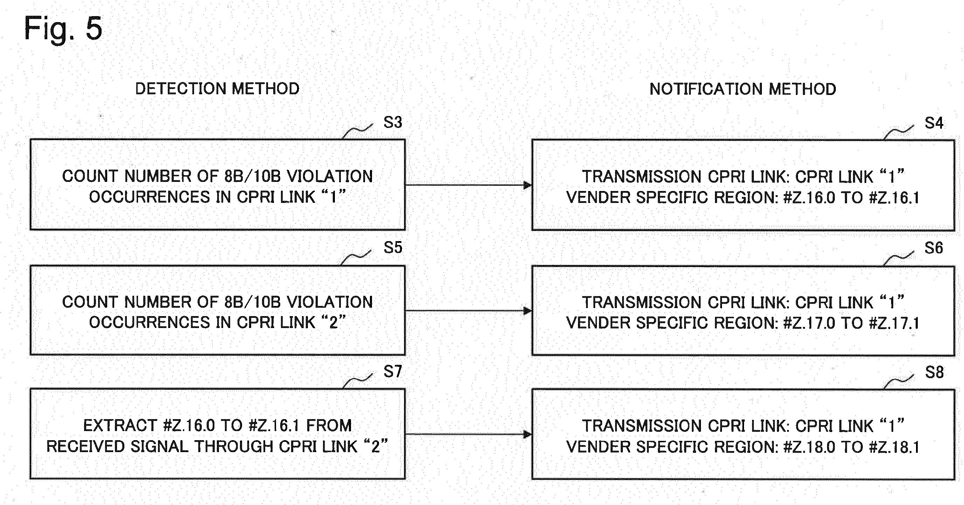

Fig. 5 is a diagram conceptually showing one example of an operation of the wireless device "1" 30A. Using Fig. 5, an operation of the wireless device "1" 30A is explained below. The left side of Fig. 5 shows a detection method. Also, the right side of Fig. 5 shows a notification method.

Firstly, the wireless device "1" 30A counts the number of 8B/10B violation occurrences in the CPRI signal received as a DL signal from the wireless control device 20 through the CPRI link "1" 40 for each hyperframe (S3). Then, the wireless device "1" 30A notifies the wireless control device 20 of the counted number of the 8B/10B violation occurrences using #Z.16.0 to #Z.16.1 of an UL signal through the CPRI link "1" 40 (S4). The notified value is updated for each hyperframe.

Next, the wireless device "1" 30A counts the number of 8B/10B violation occurrences in the CPRI signal received as the UL signal through the CPRI link "2" 50 for each hyperframe (S5). Then, the wireless device "1" 30A notifies the wireless control device 20 of the counted number of the 8B/10B violation occurrences using #Z.17.0 to #Z.17.1 of an UL signal through the CPRI link "1" 40 (S6). The notified value is updated for each hyperframe.

The wireless device "1" 30A also extracts information of #Z.16.0 to #Z.16.1 from the CPRI signal transmitted in S2 and received as the UL signal through the CPRI link "2" 50 (S7). Next, the wireless device "1" 30A notifies the wireless control device 20 of the extracted information using #Z.18.0 to #Z.18.1 of an UL signal through CPRI link "1" 40 (S8). The notified value is updated for each hyperframe.

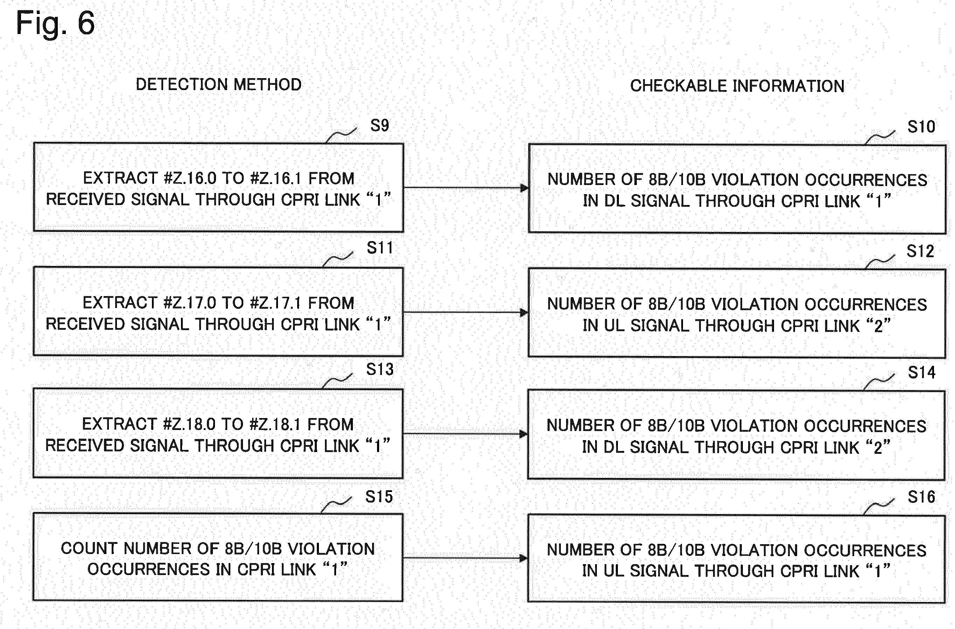

Fig. 6 is a diagram conceptually showing one example of an operation of the wireless control device 20. Using Fig. 6, an operation of the wireless control device 20 is explained below. The left side of Fig. 6 shows a detection method. Also, the right side of Fig. 6 shows checkable information.

Firstly, the wireless control device 20 receives the CPRI signal transmitted as the UL signal through the CPRI link "1" 40 in S4 and extracts the information of #Z.16.0 to #Z.16.1 (S9). This allows the wireless control device 20 to check the number of the 8B/10B violation occurrences in the DL signal through the CPRI link "1" 40 (S10).

Next, the wireless control device 20 receives the CPRI signal transmitted as the UL signal through the CPRI link "1" 40 in S6 and extracts the information of #Z.17.0 to #Z.17.1 (S11). This allows the wireless control device 20 to check the number of the 8B/10B violation occurrences in the UL signal through the CPRI link "2" 50 (S12).

The wireless control device 20 also receives the CPRI signal transmitted as the UL signal through the CPRI link "1" 40 in S8 and extracts the information of #Z.18.0 to #Z.18.1 (S13). This allows the wireless control device 20 to check the number of the 8B/10B violation occurrences in the DL signal through the CPRI link "2" 50 (S14).

Furthermore, the wireless control device 20 counts the number of 8B/10B violation occurrences in the CPRI signal received as the UL signal through the CPRI link "1" 40 for each hyperframe (S15). This allows the wireless control device 20 to check the number of the 8B/10B violation occurrences in the UL signal through the CPRI link "1" 40 (S16).

In this manner, the wireless control device 20 can check all the 8B/10B violation occurrence states in detail for DL/UL through the CPRI link "1" 40 and the CPRI link "2" 50 by the notification function using the vender specific region.

It is noted that the explanation of a simple "chain topology" is described in the present example embodiment. However, the wireless control system 10 may be able to have a CPRI link configuration of "a chain topology", "a star topology", or a combination thereof by assigning a monitored link and a vender specific region for notifying the number of 8B/10B violation occurrences to each wireless device 30 from the wireless control device 20. In these configurations, the side of the wireless control device 20 can check the 8B/10B violation occurrence state for DL/UL through each CPRI link in detail.

The wireless control system 10 according to the present example embodiment has an effect as described below.

It is possible to check a detailed error occurrence state in each CPRI link on the side of the wireless control device 20.

This is because the wireless device 30 stores the error occurrence state in the CPRI link in the vender specific region of the CPRI link and transmits the error occurrence state to the wireless control device 20.

### <Second Example Embodiment>

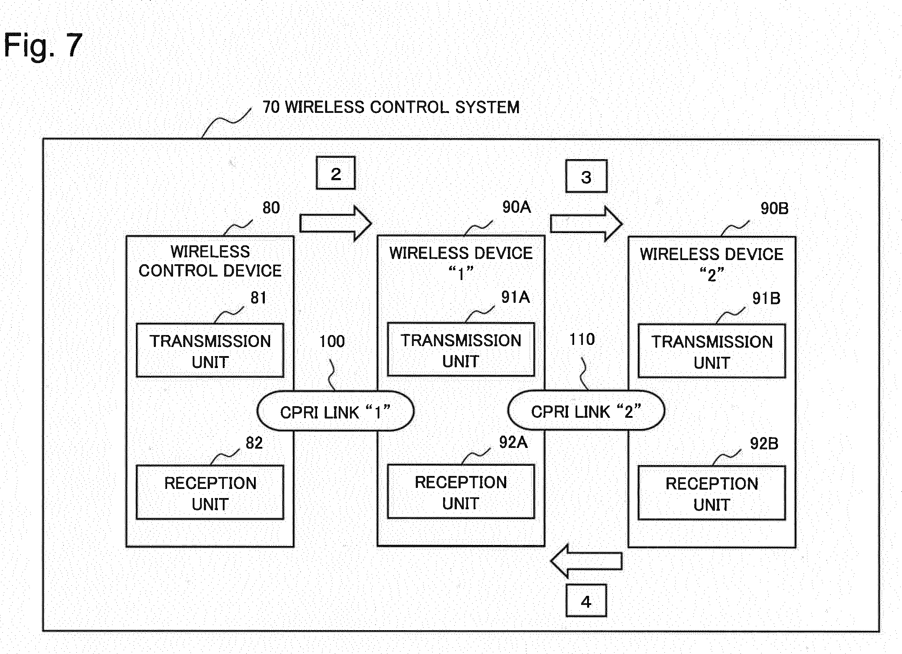

Fig. 7 is a diagram showing examples of a link No. of a wireless control system 70 (and a block diagram showing one example of a configuration) according to a second example embodiment. The numbers enclosed in a square in the figure show the examples of CPRI link Nos. "No." means the number.

In the present example embodiment, a wireless control device 80 notifies respective wireless devices 90A and 90B of only a link No. (UL/DL individually) showing a specified part of a monitored CPRI link. Meanwhile, the wireless devices 90A and 90B notify an upper device (the wireless control device 80 or the wireless device 90A) of the monitored link No. using #Z.X.0 to #Z.X.1, which are several of the most significant bits, of the vender specific region addresses. The wireless devices 90A and 90B also notify the upper device (the wireless control device 80 or the wireless device 90A) of the number of 8B/10B violation occurrences using #Z.X.0 to #Z.X.1, namely the rest of the bits. For the number of bits allocated to a link No., the proper number of bits is set depending on complexity of the system configuration.

The wireless control system 70 in the present example embodiment includes the wireless control device 80, a transmission unit 81, a reception unit 82, a wireless device "1" 90A, a wireless device "2" 90B, a transmission unit 91A, a transmission unit 91B, a reception unit 92A, a reception unit 92B, a CPRI link "1" 100, and a CPRI link "2" 110. It is noted that the wireless control system 70 has an equivalent configuration to the wireless control system 10 shown in Fig. 1 and the transmission units and the reception units shown in Fig. 3, and detailed explanations of the wireless control system 70 are omitted.

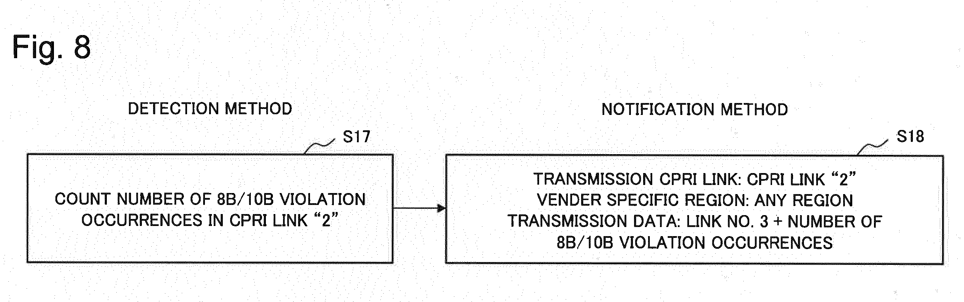

Fig. 8 is a diagram conceptually showing one example of an operation of the wireless device "2" 90B according to the second example embodiment. Using Fig. 8, an operation of the wireless device "2" 90B is explained below. The left side of Fig. 8 shows a detection method. Also, the right side of Fig. 8 shows a notification method.

It is assumed that the wireless device "2" 90B receives a DL signal from the wireless device "1" 90A through the CPRI link "2" 110. In this case, the wireless device "2" 90B counts the number of 8B/10B violation occurrences in the received CPRI signal for each hyperframe (S17). Then, the wireless device "2" 90B notifies the wireless device "1" 90A of the counted number of the 8B/10B violation occurrences and a link No. (notified from the upper device and No. 3 in this case) using any vender specific region in an UL signal through the CPRI link "2" 110 (S18). The notified value is updated for each hyperframe.

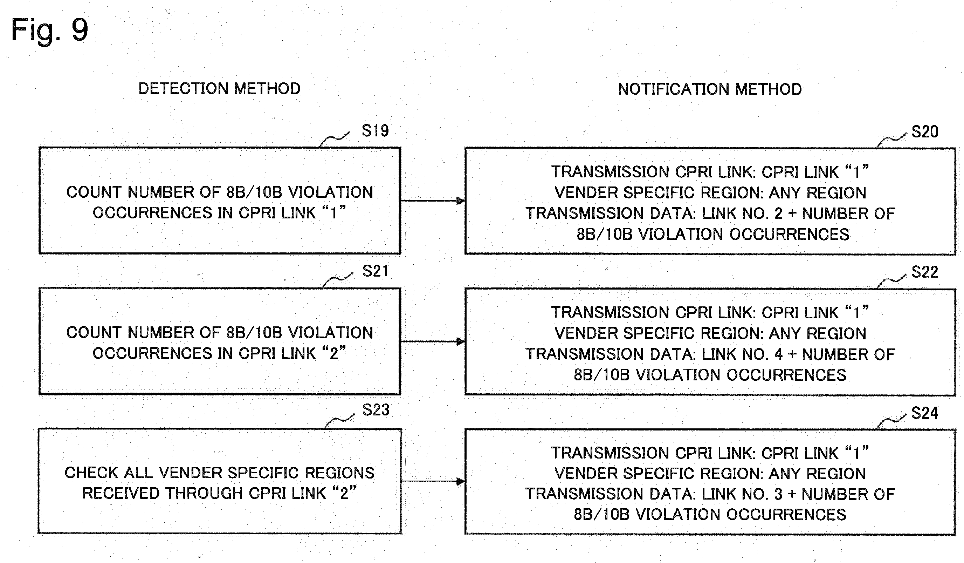

Fig. 9 is a diagram conceptually showing one example of an operation of the wireless device "1" 90A according to the second example embodiment. Using Fig. 9, an operation of the wireless device "1" 90A is explained below. The left side of Fig. 9 shows a detection method. Also, the right side of Fig. 9 shows a notification method.

Firstly, the wireless device "1" 90A counts the number of 8B/10B violation occurrences in the CPRI signal received as a DL signal from the wireless control device 80 through the CPRI link "1" 100 for each hyperframe (S19). Then, the wireless device "1" 90A notifies the wireless control device 80 of the counted number of the 8B/10B violation occurrences and a link No. (notified from the upper device and No. 2 in this case) using any vender specific region in an UL signal through the CPRI link "1" 100 The notified value is updated for each hyperframe (S20).

Next, the wireless device "1" 90A counts the number of 8B/10B violation occurrences in the CPRI signal received as an UL signal through the CPRI link "2" 110 for each hyperframe (S21). Then, the wireless device "1" 90A notifies the wireless control device 80 of the counted number of the 8B/10B violation occurrences and a link No. (notified from the upper device and No. 4 in this case) using any vender specific region in an UL signal through the CPRI link "1" 100. The notified value is updated for each hyperframe (S22).

The wireless device "1" 90A also checks all the vender specific regions (X: 16 to 19, 80 to 83, 144 to 147, 208 to 211) in the CPRI signals received as UL signals through the CPRI link "2" 110 (S23). In a case of this configuration, because information of the link No. 3 inserted by the wireless device "2" 90B in S18 is detected, the wireless device "1" 90A transfers the information (the link No. 3 and the number of the 8B/10B violation occurrences) to the wireless control device 80 using any vender specific region in the UL signal through the CPRI link "1" 100. The wireless device "1" 90A updates a notified value for each hyperframe (S24).

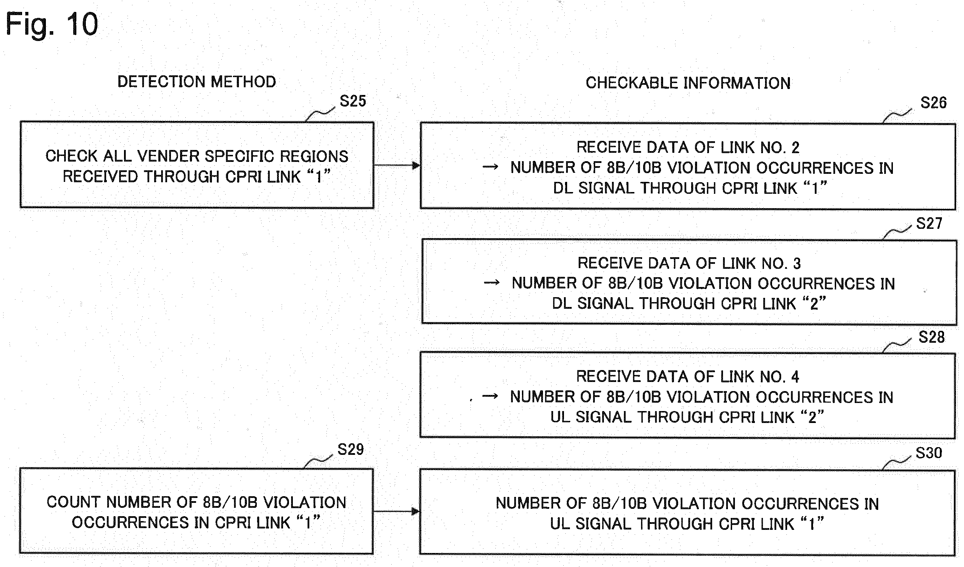

Fig. 10 is a diagram conceptually showing one example of an operation of the wireless control device 80 according to the second example embodiment. Using Fig. 10, an operation of the wireless control device 80 is explained below. The left side of Fig. 10 shows a detection method. Also, the right side of Fig. 10 shows checkable information.

Firstly, the wireless control device 80 checks all the vender specific regions (X: 16 to 19, 80 to 83, 144 to 147, 208 to 211) received as UL signals through the CPRI link "1" 100 (S25). In a case of this configuration, the wireless control device 80 can detect information of the link Nos. 2, 3, and 4 inserted by the wireless device "1" 90A. This allows the wireless control device 80 to check the number of 8B/10B violation occurrences in a DL signal through the CPRI link "1" 100 (the link No. 2), the number of 8B/10B violation occurrences in a DL signal through the CPRI link "2" 110 (the link No. 3), and the number of 8B/10B violation occurrences in an UL signal through the CPRI link "2" 110 (the link No. 4) (S26 to 28).

The wireless control device 80 also counts the number of the 8B/10B violation occurrences in the CPRI signal received as an UL signal through the CPRI link "1" 100 for each hyperframe (S29), which allows the wireless control device 80 to check the number of 8B/10B violation occurrences in the UL signal through the CPRI link "1" 100 (S30).

This function allows the wireless control device 80 to check the 8B/10B violation occurrence states for DL/UL through the CPRI link "1" 100 and the CPRI link "2" 110 in detail.

Use of this method enables the wireless control system 70 to check link Nos. and 8B/10B violation states on the same layer. The wireless control system 70 can also have an operation mode of reporting to the upper device only when an 8B/10B violation occurs, and in this case, utilize finite vender specific regions effectively.

Also, the wireless device 90 may report, as notified information, not the number of 8B/10B violation occurrences to the upper device but whether the number of 8B/10B violation occurrences exceeds a certain threshold specified by the wireless control device 80 to the upper device. Use of this method enables the wireless control system 70 to simplify monitoring on the side of the wireless control device 80, also to reduce the number of bits used for notification, and to utilize finite vender specific regions effectively.

The wireless control system 70 according to the present example embodiment has an effect as described below.

It is possible to utilize finite vender specific regions effectively.

This is because the wireless device 90 notifies the upper device of a monitored link No. using several of the most significant bits and the number of 8B/10B violation occurrences using the rest of bits.

### <Third Example Embodiment>

Next, a third embodiment for executing the present invention is explained in detail with reference to a drawing.

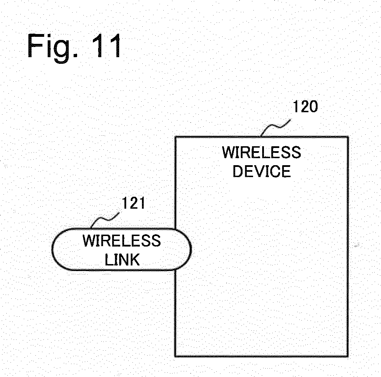

Fig. 11 is a block diagram showing one example of a configuration of a wireless device 120 according to a third example embodiment.

The wireless device 120 stores an error occurrence state in a wireless link 121 in a region that can be freely used by a user in the wireless link 121 and transmits the error occurrence state.

The wireless device 120 according to the present example embodiment has an effect as described below.

It is possible to check a detailed error occurrence state in the wireless link 121.

This is because the wireless device 120 stores an error occurrence state in the wireless link 121 in the region that can be freely used by a user in the wireless link and transmits the error occurrence state.

As described above, the example embodiments of the present invention are explained with reference to the drawings, but the present invention is not limited to the above example embodiments. In the configurations and details of the present invention, various changes that those skilled in the art could understand can be made within the scope of the present invention.

As described above, the present invention is explained taking the aforementioned example embodiments as typical examples. However, the present invention is not limited to the example embodiments described above. This means that various aspects that those skilled in the art could understand can be applied to the present invention within the scope of the present invention.

### [Reference signs List]

- 10: Wireless control system
- 20: Wireless control device
- 21: Transmission unit
- 22: Reception unit
- 30A: Wireless device "1"
- 30B: Wireless device "2"
- 31A: Transmission unit
- 31B: Transmission unit
- 32A: Reception unit
- 32B: Reception unit
- 40: CPRI link "1"
- 50: CPRI link "2"
- 600: Received CPRI signal
- 601: Deserialization circuit
- 602: 8B/10B decoding circuit
- 603: Hyperframe detection circuit
- 604: 8B/10B violation occurrence notification
- 605: Hyperframe timing notification
- 606: 8B/10B violation count circuit
- 607: 8B/10B violation count result notification
- 608: Transmission signal generating circuit
- 609: CPRI signal before 8B/10B process
- 610: Vender specific insertion circuit
- 611: 8B/10B encoding circuit
- 612: Serialization circuit
- 613: Transmitted CPRI signal
- 70: Wireless control system
- 80: Wireless control device
- 81: Transmission unit
- 82: Reception unit
- 90A: Wireless device "1"
- 90B: Wireless device "2"
- 91A: Transmission unit
- 91B: Transmission unit
- 92A: Reception unit
- 92B: Reception unit
- 100: CPRI link "1"
- 110: CPRI link "2"
- 120: Wireless device
- 121: Wireless link

## Claims

1. A wireless device (30) which is configured to:
store an error occurrence state in a wireless link (121) in a region that can be freely used by a user in the wireless link; and
to transmit the error occurrence state,
wherein the wireless link (121) is a Common Public Radio Interface, CPRI, link,
wherein the error occurrence state is a number of converting 8-bit data into 10-bit data, 8B/10B, violation occurrences, and
wherein the region is a region that can be freely used by the user, included in a hyperframe in CPRI link.

2. The wireless device (30) according to claim 1,
wherein the error is a violation in 8B/10B decoding, and
wherein 8B/10B decoding is an 8B/10B process that is a transfer process for transmitting data by converting 8-bit data into 10-bit data.

3. The wireless device (30) according to claim 1 or claim 2,
wherein the wireless device (30) is further configured to:
store information showing a specified part of the wireless link (121) that the error occurred in the region that can be freely used by the user in the wireless link (121) and;
transmit the information.

4. A wireless control system (10) comprising:
one or more of the wireless device (30) according to any one of claims 1 to 3; and
a wireless control device (20) for controlling the wireless devices (30),
wherein the wireless link (121) connects the wireless control device (20) and each of the one or more wireless devices.

5. The wireless control system (10) according to claim 4,
wherein the wireless device (30) is configured to transmit the error occurrence state to the wireless control device (20) through another of the wireless devices.

6. A method for monitoring a wireless link error comprising:
storing an error occurrence state in a wireless link (121) in a region that can be freely used by a user in the wireless link (121); and
transmitting the error occurrence state,
wherein the wireless link (121) is a Common Public Radio Interface, CPRI, link,
wherein the error occurrence state is a number of converting 8-bit data into 10-bit data, 8B/10B, violation occurrences, and
wherein the region is the region that can be freely used by the user, included in a hyperframe in CPRI link.

7. The method for monitoring a wireless link error according to claim 6,
wherein the error is a violation in 8B/10B decoding, and
wherein 8B/10B decoding is an 8B/10B process that is a transfer process for transmitting data by converting 8-bit data into 10-bit data.

8. The method for monitoring a wireless link error according to claim 6 or claim 7,
wherein the wireless device (30) further stores information showing a specified part of the wireless link (121) that the error occurred in the region that can be freely used by the user in the wireless link (121) and transmits the information.

## Patentansprüche

1. Drahtlose Vorrichtung (30), die konfiguriert ist, um:
einen Fehlerereigniszustand in einer drahtlosen Verbindung (121) in einem Bereich, der von einem Benutzer in der drahtlosen Verbindung frei verwendet werden kann, zu speichern; und
den Fehlerereigniszustand zu übertragen,
wobei die drahtlose Verbindung (121) eine allgemeine öffentliche Funkschnittstellen-, CPRI-, Verbindung ist,
wobei der Fehlerereigniszustand eine Anzahl von Verletzungsereignissen bei der Konvertierung von 8-Bit-Daten in 10-Bit-Daten, 8B/10B, ist, und
wobei der Bereich ein Bereich ist, der von dem Benutzer frei verwendet werden kann, der in einem Hyperrahmen in der CPRI-Verbindung enthalten ist.

2. Drahtlose Vorrichtung (30) nach Anspruch 1,
wobei der Fehler eine Verletzung in der 8B/10B-Dekodierung ist, und
wobei die 8B/10B-Dekodierung ein 8B/10B-Verfahren ist, das ein Transferverfahren zum Übertragen von Daten durch Konvertieren von 8-Bit-Daten in 10-Bit-Daten ist.

3. Drahtlose Vorrichtung (30) nach Anspruch 1 oder Anspruch 2,
wobei die drahtlose Vorrichtung (30) ferner konfiguriert ist, um:
Informationen zu speichern, die einen spezifizierten Teil der drahtlosen Verbindung (121) zeigen, in dem der Fehler in dem Bereich aufgetreten ist, der von dem Benutzer in der drahtlosen Verbindung (121) frei verwendet werden kann; und
die Informationen zu übertragen.

4. Drahtloses Steuersystem (10), das aufweist:
eine oder mehrere der drahtlosen Vorrichtungen (30) nach einem der Ansprüche 1 bis 3; und
eine drahtlose Steuervorrichtung (20) zum Steuern der drahtlosen Vorrichtungen (30),
wobei die drahtlose Verbindung (121) die drahtlose Steuervorrichtung (20) und jede der einen oder mehreren drahtlosen Vorrichtungen verbindet.

5. Drahtloses Steuersystem (10) nach Anspruch 4,
wobei die drahtlose Vorrichtung (30) konfiguriert ist, um den Fehlerereigniszustand durch eine andere der drahtlosen Vorrichtungen an die drahtlose Steuervorrichtung (20) zu übertragen.

6. Verfahren zur Überwachung drahtloser Verbindungsfehler, das aufweist:
Speichern eines Fehlerereigniszustands in einer drahtlosen Verbindung (121) in einem Bereich, der von einem Benutzer in der drahtlosen Verbindung (121) frei verwendet werden kann; und
Übertragen des Fehlerereigniszustands,
wobei die drahtlose Verbindung (121) eine allgemeine öffentliche Funkschnittstellen-, CPRI-, Verbindung ist,
wobei der Fehlerereigniszustand eine Anzahl von Verletzungsereignissen bei der Konvertierung von 8-Bit-Daten in 10-Bit-Daten, 8B/10B, ist, und
wobei der Bereich der Bereich ist, der von dem Benutzer frei verwendet werden kann, der in einem Hyperrahmen in der CPRI-Verbindung enthalten ist.

7. Verfahren zur Überwachung drahtloser Verbindungsfehler nach Anspruch 6,
wobei der Fehler eine Verletzung in der 8B/10B-Dekodierung ist, und
wobei die 8B/10B-Dekodierung ein 8B/10B-Verfahren ist, das ein Transferverfahren zum Übertragen von Daten durch Konvertieren von 8-Bit-Daten in 10-Bit-Daten ist.

8. Verfahren zur Überwachung drahtloser Verbindungsfehler nach Anspruch 6 oder Anspruch 7,
wobei die drahtlose Vorrichtung (30) ferner Informationen speichert, die einen spezifizierten Teil der drahtlosen Verbindung (121) zeigen, in dem der Fehler in dem Bereich aufgetreten ist, der von dem Benutzer in der drahtlosen Verbindung (121) frei verwendet werden kann, und die Informationen zu überträgt.

## Revendications

1. Dispositif sans fil (30) qui est configuré pour :
stocker un état de survenue d'erreur dans une liaison sans fil (121) dans une région qui peut être librement utilisée par un utilisateur dans la liaison sans fil ; et
transmettre l'état de survenue d'erreur,
dans lequel la liaison sans fil (121) est une liaison d'interface radio publique commune, CPRI,
dans lequel l'état de survenue d'erreur est un nombre de survenues de violation de conversion de données de 8 bits en données de 10 bits, 8B/10B, et
dans lequel la région est une région qui peut être librement utilisée par l'utilisateur, incluse dans une hypertrame dans une liaison CPRI.

2. Dispositif sans fil (30) selon la revendication 1,
dans lequel l'erreur est une violation dans un décodage 8B/10B, et
dans lequel le décodage 8B/10B est un processus 8B/10B qui est un processus de transfert pour transmettre des données par conversion de données de 8 bits en données de 10 bits.

3. Dispositif sans fil (30) selon la revendication 1 ou la revendication 2,
dans lequel le dispositif sans fil (30) est en outre configuré pour :
stocker des informations montrant une partie spécifiée de la liaison sans fil (121) où l'erreur s'est produite dans la région qui peut être librement utilisée par l'utilisateur dans la liaison sans fil (121) et ;
transmettre les informations.

4. Système de commande sans fil (10) comprenant :
un ou plusieurs dispositifs sans fil (30) selon l'une quelconque des revendications 1 à 3; et
un dispositif de commande sans fil (20) pour commander les dispositifs sans fil (30),
dans lequel la liaison sans fil (121) connecte le dispositif de commande sans fil (20) et chacun des un ou plusieurs dispositifs sans fil.

5. Système de commande sans fil (10) selon la revendication 4,
dans lequel le dispositif sans fil (30) est configuré pour transmettre l'état de survenue d'erreur au dispositif de commande sans fil (20) par le biais d'un autre des dispositifs sans fil.

6. Procédé de surveillance d'une erreur de liaison sans fil comprenant :
le stockage d'un état de survenue d'erreur dans une liaison sans fil (121) dans une région qui peut être librement utilisée par un utilisateur dans la liaison sans fil (121) ; et
la transmission de l'état de survenue d'erreur,
dans lequel la liaison sans fil (121) est une liaison d'interface radio publique commune, CPRI,
dans lequel l'état de survenue d'erreur est un nombre de survenues de violation de conversion de données de 8 bits en données de 10 bits, 8B/10B, et
dans lequel la région est la région qui peut être librement utilisée par l'utilisateur, incluse dans une hypertrame dans une liaison CPRI.

7. Procédé de surveillance d'une erreur de liaison sans fil selon la revendication 6,
dans lequel l'erreur est une violation dans un décodage 8B/10B, et
dans lequel le décodage 8B/10B est un processus 8B/10B qui est un processus de transfert pour transmettre des données par conversion de données de 8 bits en données de 10 bits.

8. Procédé de surveillance d'une erreur de liaison sans fil selon la revendication 6 ou la revendication 7,
dans lequel le dispositif sans fil (30) stocke en outre des informations montrant une partie spécifiée de la liaison sans fil (121) où l'erreur s'est produite dans la région qui peut être librement utilisée par l'utilisateur dans la liaison sans fil (121) et transmet les informations.
